# EUROPÄISCHE PATENTSCHRIFT

(11) **EP 3 176 112 B1**
(45) Veröffentlichungstag und Bekanntmachung des Hinweises auf die Patenterteilung: **26.08.2020**
(21) Anmeldenummer: 16202208.1
(22) Anmeldetag: 05.12.2016
(51) Int. Cl.: B65G 59/10, B65B 43/44

(54) **VERFAHREN ZUM VEREINZELN GESTAPELTER ELASTISCHER SCHALEN UND VERWENDUNG EINER VORRICHTUNG ZUR DURCHFÜHRUNG DES VERFAHRENS**
METHOD FOR SEPARATING PILED ELASTIC SHELLS AND USE OF A DEVICE FOR CARRYING OUT THE METHOD
PROCÉDÉ DE SÉPARATION DE COQUES ÉLASTIQUES EMPILÉES ET UTILISATION D'UN DISPOSITIF POUR LA MISE EN OEUVRE DU PROCÉDÉ

(30) Priorität: 03.12.2015 DE 102015224256
(43) Veröffentlichungstag der Anmeldung: 07.06.2017
(73) Patentinhaber: Deutsches Institut für Lebensmitteltechnik e.V., 49610 Quakenbrück (DE)
(72) Erfinder: Hukelmann, Bernhard, 49610 Quakenbrück (DE)
(74) Vertreter: Taruttis, Stefan Georg

(56) Entgegenhaltungen:
- FR-A1- 2 740 761
- JP-A- H06 183 568
- JP-A- S62 126 037
- JP-A- 2010 001 040
- JP-A- 2015 124 005
- US-A- 2 954 900
- US-A- 3 379 346
- US-A- 3 661 282
- US-A1- 2006 131 130

## Beschreibung

Die vorliegende Erfindung betrifft ein Verfahren zum Vereinzeln von gestapelten elastischen Schalen, deren Öffnung zumindest an zwei gegenüberliegenden Abschnitten von einem nach außen überstehenden Kragen eingefasst ist und die Verwendung einer Vorrichtung zur

Durchführung des Verfahrens. Solche Schalen sind in Stapeln erhältlich und müssen entstapelt werden, bevor sie z.B. zur Verpackung von Gemüse eingesetzt werden können. Bevorzugt ist die Vorrichtung eingerichtet, an verschieden dimensionierte Schalen, die gestapelt sind, zu deren Vereinzelung angepasst zu werden.

### Stand der Technik

Die US 2,954,900 A beschreibt zur Vereinzelung von Deckeln aus einem Stapel eine Vorrichtung mit einem unteren Paar von Trägern, die in einen geringen Abstand zueinander bewegt werden, in dem die flache Oberseite der Deckel auf den Trägern aufliegt, wobei der Stapel von Deckeln durch ein weiteres Paar von Trägern über eine größere Anzahl von Deckeln geklemmt wird, indem diese Träger beidseitig gegen die Ränder des Deckelstapels verfahren wird. So können die Träger von unterhalb des Stapels entfernt werden und ein Greifer kann an den untersten Deckel bewegt werden.

Das Dokument JP H06 183568 A offenbart ein Verfahren zum Vereinzeln von ineinander gestapelten elastischen Schalen, deren Öffnung zumindest abschnittsweise von einem nach außen überstehenden Kragen eingefasst ist, bei dem in einem ersten Schritt erste Träger in einer ersten Ebene in einem kleinen Abstand angeordnet sind und darauf der Kragen einer endständigen Schale des Stapels aufliegt und zweite Träger, die in einer zur ersten Ebene parallelen zweiten Ebene in einem größeren Abstand voneinander angeordnet sind, und bei dem in einem zweiten Schritt die zweiten Träger in einen kleineren Abstand bewegt werden, so dass die zweiten Träger gegen den auf den ersten Trägern aufliegenden Kragen einer endständigen Schale bewegt werden und diesen Kragen bis in den kleineren Abstand der zweiten Träger zusammendrücken.

Die JP 62126037 A beschreibt zur Vereinzelung von Schalen zwei Paare übereinanderliegender Träger, die gegen einen Schalenstapel verfahren werden und eingerichtet sind, dass ein Paar Träger von dem Bereich unterhalb des Rands der endständigen Schale wegbewegt wird, wenn ein Greifer gegen den Boden dieser Schale bewegt ist und das andere Paar Träger in den Bereich zwischen dem Rand der endständigen Schale und dem Rand der nächsten Schale bewegt ist.

Die JP 2010001040 beschreibt zur Vereinzelung von Behältern eine Vorrichtung, bei der oberhalb von Stoppelementen 4, auf denen ein Schalenstapel aufliegt, Nadeln angeordnet sind, die in den Freiraum zwischen dem endständigen Behälter und dem unmittelbar darüber liegenden Behälter bewegt werden können, sodass anschließend der endständige Behälter vom Stapel getrennt werden kann.

Die EP 2397413 B1 beschreibt eine Vorrichtung zum Vereinzeln gestapelter Schalen, bei der die vorletzte Schale des Stapels gehalten wird und Luft zwischen die letzte und vorletzte Schale geblasen wird.

Die EP 2397413 A1 und die EP 2799350 A1 beschreiben für das Entstapeln von Schalen eine Vorrichtung, bei der parallel übereinanderliegende erste und zweite Träger horizontal unter den Rand benachbarter Schalen eines Stapels bewegt werden und zur Trennung der Schalen Luft seitlich zwischen die Schalen geblasen werden kann.

Die US 3,601,282 A beschreibt eine Vorrichtung zum Entstapeln von Schalen, bei der beidseitig der Schalen Trennmesser horizontal unter die Schalenränder beweglich sind und die unterste Schale vom Stapel durch einen federbelasteten Finger bewegt wird, der unter dem Trennmesser angelenkt ist, das die angrenzende Schale hält.

Die US 4,948,011 A beschreibt eine Vorrichtung zum Entstapeln von Schalen, bei der die Ränder aneinander angrenzender Schalen von horizontal gegeneinander beweglichen U-förmigen Greiferpaaren umfasst werden und anschließend die unteren Greifer vertikal bewegt werden, um die unterste Schale vom Stapel abzutrennen, während die angrenzende Schale von einem Paar Greifer gehalten wird.

Die DE 10328973 A1 beschreibt zum Entstapeln Träger, die unter Schalenränder beweglich sind, wobei der untere Träger eine Etikettiervorrichtung für die untere Schale aufweist.

Die EP 1275604 A2 beschreibt eine Entstapelvorrichtung für Blister mit einem Paar von Trägern, die unter Schalenränder beweglich sind und unterhalb dieser Träger angeordneten flexiblen Rückhalteelementen für Blister und mit Sauggreifern zum Abziehen des unteren Blisters.

Die EP 1275604 A2 beschreibt einen Entstapler, bei dem Schalen eines Stapels durch Bürsten und Messer gehalten werden, die zwischen die Ränder zweier Schalen beweglich sind. Die letzte Schale eines Stapels wird nur durch die Bürsten gehalten und von Saugnäpfen angesaugt, wobei für die Trennung Luft zwischen die letzte und vorletzte Schale geblasen wird.

### Aufgabe der Erfindung

Die Aufgabe der Erfindung liegt darin, ein alternatives Verfahren zum Vereinzeln von ineinander gestapelten Schalen bereitzustellen und in der Verwendung einer Vorrichtung zur Durchführung des Verfahrens Bevorzugt soll sich die Vorrichtung an das Vereinzeln unterschiedlich dimensionierter gestapelter Schalen anpassen lassen.

### Beschreibung der Erfindung

Die Erfindung löst die Aufgabe mit den Merkmalen der Ansprüche und insbesondere einem Verfahren nach Anspruch 1 und mit der Verwendung einer Vorrichtung für das Verfahren, die erste Träger und zweite Träger aufweist, die jeweils in zueinander parallelen Ebenen aufeinander zu in einen kleineren Abstand und voneinander weg in einen größeren Abstand bewegt werden können, z.B. ein Paar erster Träger und ein Paar zweiter Träger. Zu vereinzelnde Schalen werden in dem Abstand zwischen den Trägern angeordnet, so dass die überstehenden Kragen der Schalen abhängig von der Stellung der Träger im kleineren oder größeren Abstand voneinander auf den ersten Trägern oder auf den zweiten Trägern aufliegen.

Die ersten Träger sind in der ersten Ebene gegeneinander und die zweiten Träger sind in der zweiten Ebene gegeneinander jeweils von einem kleineren Abstand in einen größeren Abstand beweglich, sodass sie von dem größeren Abstand in den kleineren Abstand aufeinander zu bewegt werden können, und von dem kleineren Abstand in den größeren Abstand voneinander weg bewegt werden können. Der kleinere und der größere Abstand können für jeweils die ersten bzw. zweiten Träger unterschiedlich oder gleich sein. Die ersten Träger und zweiten Träger sind jeweils in einem Abstand voneinander angeordnet, dass sie in dem Abstand zwischen sich ineinander gestapelte elastische Schalen aufnehmen können, wobei sie in dem kleineren Abstand eingerichtet sind, dass die an den Schalen überstehenden Kragen auf den ersten oder zweiten Trägern aufliegen und in dem größeren Abstand die überstehenden Kragen der Schalen nicht von den Trägern gestützt werden. Die ersten und zweiten Träger sind dabei so beweglich, dass jeweils die ersten Träger oder die zweiten Träger in dem kleineren Abstand zueinander angeordnet sind, in dem sie eingerichtet sind, dass eine Schale mit ihren überstehenden Kragen darauf aufliegen kann. In dem kleineren Abstand sind die ersten Träger in der ersten Ebene bzw. die zweiten Träger in der dazu parallelen zweiten Ebene in einem Abstand, in dem der Kragen einer Schale darauf aufliegt. In dem größeren Abstand liegt der Kragen nicht auf den Trägern auf, so dass z.B. eine endständige untere Schale eines Stapels nur durch Klemmung z.B. ihrer Seitenwände an einer oberen Schale gehalten wird, wobei der Kragen der oberen Schale auf zweiten Trägern aufliegt, die in dem kleineren Abstand zueinander positioniert sind.

Die Vorrichtung zeichnet sich dadurch aus, dass die zweiten Träger zu einer Bewegung in einen kleineren Abstand eingerichtet sind, in dem sie den Kragen einer Schale zusammendrücken. Z.B. ist die Vorrichtung eingerichtet, die zweiten Träger in einen kleineren Abstand zu bewegen, in dem sie den Kragen einer Schale um einen Betrag von z.B. zumindest 5% oder zumindest 100%, z.B. von 10 bis 70% zusammenzudrücken, insbesondere bestimmt als Erstreckung des Kragens in einer Ebene parallel zum Boden der Schale. Dabei ist die Erstreckung des Kragens in einer Ebene parallel zum Boden der Schale bevorzugt der Abstand der äußersten Kragenaußenseite zur Wand der Schale, wobei die Erstreckung bei Anordnung der Schale auf einer horizontalen Ebene horizontal ist. Dabei ist die Schale bevorzugt die vorletzte Schale, die an die endständige Schale angrenzt. Dabei sind die ersten Träger in ihrem kleineren Abstand zueinander angeordnet, in dem sie den Kragen der endständigen Schale tragen, bzw. in dem der Kragen der endständigen Schale auf den ersten Trägern aufliegt.

Die zweiten Träger sind, wenn sie in ihrem kleineren Abstand zueinander angeordnet sind, eingerichtet, den Kragen einer endständigen Schale zusammenzudrücken, der z.B. der in der zweiten Ebene bestimmte Abstand der äußeren Kragenkanten ist. Der kleinere Abstand ist z.B. um einen Betrag von zweimal mindestens 5 % oder zumindest 10 bis 70% der Erstreckung des Kragens in der zweiten Ebene kleiner ist als der Abstand der äußeren Kragenkanten im unbelasteten Zustand. Dabei kann der kleinere Abstand einer sein, in dem die zweiten Träger die endständige Schale um mehr als die Erstreckung des Kragens in der zweiten Ebene zusammendrücken. Der zweite Abstand kann z.B. 0,5 bis 10 mm, bis 4 mm oder bis 1 mm weniger als der Abstand der äußeren Kragenkanten der Schale im unbelasteten Zustand betragen. Dabei ist der unbelastete Zustand z.B. der Zustand, in dem eine einzelne Schale nur von einer Ebene berührt wird, auf der die Schale steht, und insbesondere der Zustand der Schale im gestapelten Zustand.

Dadurch, dass die Vorrichtung eingerichtet ist, die zweiten Träger in einen kleineren Abstand zu bewegen, in dem diese den Kragen der endständigen Schale zusammendrücken, während dieser Kragen der angrenzenden endständigen Schale des Stapels auf den ersten Trägern aufliegt, hat die Vorrichtung den Vorteil, dass die Träger nicht so ausgerichtet sein müssen, um in den Zwischenraum zweier Kragen bewegt zu werden. Denn in der Stellung der zweiten Träger in ihrem kleineren Abstand, in dem sie den Kragen der endständigen Schale zusammendrücken, sind sie unterhalb des Kragens der daran angrenzend gestapelten vorletzten Schale angeordnet.

Bevorzugt sind die ersten und zweiten Träger zumindest in ihrer Stellung in ihrem kleineren Abstand in angrenzenden Ebenen, bzw. aneinander angrenzend in parallelen Ebenen angeordnet, bevorzugt in ihren Stellungen im kleineren und größeren Abstand.

Die Vorrichtung ist zur Durchführung des Verfahrens eingerichtet, insbesondere, dass in einem ersten Schritt die zweiten Träger in dem größeren Abstand angeordnet sind und die ersten Träger in dem kleineren Abstand angeordnet sind, so dass darauf der Kragen einer endständigen Schale des Stapels aufliegen kann. Dabei ist die Vorrichtung eingerichtet, dass in einem zweiten Schritt die zweiten Träger in der zweiten Ebene von ihrem größeren Abstand in den kleineren Abstand bewegt werden, wenn die ersten Träger im kleineren Abstand angeordnet sind. Dabei ist der kleinere Abstand der zweiten Träger z.B. in einem Bereich zwischen dem kleineren Abstand, in dem die ersten Träger angeordnet sind, und dem Abstand, in dem die überstehenden Kragen angeordnet sind, so dass die zweiten Träger gegen den auf den ersten Trägern aufliegenden Kragen einer Schale bewegt werden und diesen Kragen bis in den kleineren Abstand der zweiten Träger zusammendrücken. Dabei kann dieser auf den ersten Trägern aufliegende Kragen über die ersten Träger bewegt werden. Diese Schale ist bevorzugt in diesem Schritt die endständige Schale des Stapels. Die zweiten Träger bewegen sich beim Zusammendrücken des Kragens der endständigen Schale unter den überstehenden Kragen einer vorletzten Schale, die angrenzend an bzw. oberhalb der endständigen Schale des Stapels gestapelt ist.

Die zweiten Träger weisen dabei eine von den ersten Trägern abgewandte erste Oberfläche in einem Abstand von den ersten Trägern auf, der z.B. maximal die Höhe des Kragens ist, bestimmt senkrecht zum Boden der Schale, maximal der Abstand der Kragen innerhalb des Stapels angrenzender Schalen, bevorzugt der Abstand der Oberkanten der Kragen zweier gestapelter Schalen. Die Vorrichtung ist eingerichtet, dass in dem Zustand, in dem die ersten Träger in ihren kleineren Abstand bewegt sind und die zweiten Träger in ihren kleineren Abstand bewegt sind, der Kragen einer endständigen Schale auf den ersten Trägern aufliegt und von den zweiten Trägern zusammengedrückt wird, wobei der Kragen einer in dieser endständigen Schale gestapelten vorletzten Schale auf den zweiten Trägern aufliegt. Die Vorrichtung ist eingerichtet, dass in einem anschließenden dritten Schritt die ersten Träger in ihren größeren Abstand bewegt werden und in einem gleichzeitigen oder anschließenden vierten Schritt ein Sauggreifer in einem Abstand von der ersten Ebene verfahren wird, sodass der Sauggreifer an den Schalenboden oder die Wand der endständigen Schale anliegt. Da die ersten Träger in ihren größeren Abstand bewegt sind, liegt der Kragen der endständigen Schale nicht mehr auf den ersten Trägern auf und der Sauggreifer kann diese Schale durch Ansaugen von deren Schalenboden und Bewegen in einen größeren Abstand von der ersten Ebene von dem Stapel vereinzeln. Der Kragen der im Stapel angrenzenden Schale liegt auf den zweiten Trägern auf und wird durch diese zurückgehalten. Dabei ist der Abstand von der ersten Ebene z.B. die Höhe einer Schale, die mit ihrem Rand auf den ersten Trägern aufliegt, bis zu ihrem Boden.

Die Vorrichtung weist eine Steuerungseinrichtung zur Steuerung der Träger jeweils in ihren größeren und kleineren Abstand und des Sauggreifers auf. Die Steuerungseinrichtung kann eingerichtet sein, über Kraftsensoren Kräfte, z.B. Anpressdrücke der Träger, mit denen diese gegen den Kragen drücken, als Rückkopplungs- bzw. (Zu)Stellsignal einzusetzen. Dies ist bevorzugt, um z.B. auf Fertigungsabweichungen der Schalen, insbesondere Abweichungen in den äußeren Abmaßen, automatisch einzugehen und damit das Verfahren an Abweichungen in den Maßen der Schalen anzupassen. Entsprechend weist die Vorrichtung bevorzugt Kraftsensoren an den zweiten Trägern auf, die den Anpressdruck der zweiten Träger gegen den Rand der Schale aufnehmen, und eine Steuerungseinrichtung auf, die eingerichtet ist, abhängig von Signalen der Kraftsensoren den Vorschub der zweiten Träger gegen den Rand der Schale zu steuern, z.B. bis die zweiten Träger mit einer vorgegebenen Kraft gegen den Rand der Schale belastet sind. Bevorzugt weist die Vorrichtung Kraftsensoren auf, die die Kraft messen, mit der die zweiten Träger gegen den Rand einer Schale belastet sind.
Weiter optional weist die Vorrichtung Kraftsensoren an den ersten Trägern auf, die entsprechend der Kraftsensoren an den zweiten Trägern eingerichtet sind, die Kraft zu bestimmen, mit der die ersten Träger gegen die Schale, z.B. gegen deren Wand belastet sind. Diese Kraftsensoren sind mit der Steuerungseinrichtung zur Übermittlung von Messwerten verbunden und die Steuerungseinrichtung ist bevorzugt eingerichtet, die ersten Träger in Richtung auf die Schale zu verfahren, bis ein vorbestimmter Messwert für die Kraft anliegt bzw. gemessen wird.

Die Kraftsensoren sind mit der Steuerungseinrichtung zur Übermittlung von Messwerten verbunden, z.B. von Messwerten für die aufgenommene Kraft, mit der ein Träger gegen einen Abschnitt einer Schale, z.B. deren Rand, belastet ist, bzw. für die Kraft, die zwischen dem Trägerantrieb oder einer Halterung für den Träger und dem Träger anliegt, und optional zusätzlich von Messwerten für den von einem Träger zurückgelegten Weg. Generell bevorzugt sind die Kraftsensoren Kraft-Weg-Sensoren, die die anliegende Kraft und den zurückgelegten Weg eines Trägers messen.

Optional weisen die zweiten Träger an den sich gegenüberliegenden beabstandeten Kanten eine Keilform auf. Eine solche keilförmige Kante, die den Abstand zwischen den zweiten Trägern begrenzt bzw. gegen eine Schale, insbesondere gegen den Kragen einer endständigen Schale beweglich ist, hat den Vorteil, die Kragen benachbarter Schalen effektiv zu trennen. Die Keilform kann auf der dem ersten Träger zugewandten zweiten Oberfläche und/oder auf der ersten Oberfläche der zweiten Träger vorliegen. Die Vorrichtung hat den Vorteil, dass beim Zusammendrücken des Kragens der endständigen Schale durch die zweiten Träger die zweiten Träger unter den Kragen einer angrenzenden z.B. vorletzten Schale geschoben werden und daher nicht ausgerichtet sein müssen, um in eine Lücke zwischen zwei Schalen bewegt zu werden.

Durch das Wegbewegen der endständigen bzw. untersten Schale bildet die nächste vorletzte Schale des Stapels, deren Kragen auf den zweiten Trägern aufliegt, nun die endständige bzw. unterste Schale. Die Vorrichtung ist daher eingerichtet, in einem anschließenden fünften Schritt die ersten Träger in ihren kleineren Abstand zu bewegen, so dass die ersten Träger unter dem Kragen dieser Schale angeordnet sind, und dass anschließend die zweiten Träger in ihren größeren Abstand bewegt werden, sodass der Kragen der nun endständigen bzw. nun untersten Schale, der auf den zweiten Trägern auflag, nun auf den ersten Trägern aufliegt. Das Verfahren kann nun von neuem mit Schritt 1 starten.

Die Träger können z.B. im Wesentlichen plattenförmig sein, z.B. mit einer Dicke in der ersten bzw. zweiten Ebene von 0,1 bis 3 mm, z.B. mit einer Breite, die den Abstand zum gegenüberliegenden Träger begrenzt, von 1 bis 30 cm, bevorzugt bis 15 cm. Die Distanz zwischen dem kleineren Abstand der Träger und dem größeren Abstand der Träger, über die die Träger bewegt werden, kann z.B. der zweifache Abstand sein, um den ein Kragen die Schalenwand überragt, z.B. 3 bis 5 mm.

Bevorzugt wird der Sauggreifer durch die Öffnung eines in einem Abstand zur ersten Ebene angeordneten Rahmens verfahren, der den Schalenboden stützen kann, sodass bei Abstellen des Saugdrucks der Sauggreifer von der Schale entfernt werden kann, die auf dem Rahmen aufliegt. Der Rahmen ist in einem Abstand von den Trägern angeordnet, so dass die endständige Schale z.B. senkrecht zu ihrem Schalenboden vom Stapel weg bewegt werden kann und bei Abstellen auf dem Rahmen bewegt werden kann, ohne in Kontakt mit dem Stapel zu kommen.

Der Sauggreifer kann alternativ eingerichtet sein, gegen die Seitenwände der jeweils endständigen Schale bewegt zu werden, und dann in einen größeren Abstand von der ersten Ebene verfahren zu werden. In dieser Ausführungsform ist bevorzugt, dass die Vorrichtung zwei Sauggreifer aufweist, deren Saugöffnungen beabstandet gegeneinander gerichtet sind, die jeweils an die Seitenwände der endständigen Schale verfahren werden können und anschließend in einen größeren Abstand von der ersten Ebene verfahren werden können, um die endständige Schale von dem Stapel zu vereinzeln, bevorzugt auf einen Rahmen abzusetzen.

Der Rahmen kann Teil einer Fördereinrichtung sein, die miteinander verbundene Rahmen aufweist, die in einer Förderrichtung beweglich sind, z.B. in Form eines umlaufenden Bands mit Rahmen.

Bevorzugt weist der Sauggreifer einen Drucksensor zur Messung des im Sauggreifer anliegenden Saugdrucks bzw. Vakuums auf und die Vorrichtung ist eingerichtet, den Sauggreifer dann von dem Stapel weg zu bewegen, wenn ein vorbestimmter Saugdruck gemessen wird. Dazu ist z.B. der Drucksensor mit einer Steuerungseinrichtung verbunden, die die Bewegung des Sauggreifers abhängig von Signalen des Drucksensors steuert.

In dieser Ausführungsform wird der Messwert für den anliegenden Saugdruck bevorzugt als Signal für das Anliegen einer Schale am Sauggreifer verwendet. Entsprechend ist die Vorrichtung bevorzugt eingerichtet, dass der Sauggreifer in Richtung auf die Schale bewegt wird, z.B. gegen die erste Ebene bzw. in Richtung auf den Boden der Schale oder in Richtung auf die Wand der Schale, bis ein Messwert für einen vorbestimmten Saugdruck durch den Drucksensor gemessen wird und weiter bevorzugt der Sauggreifer von der ersten Ebene weg bewegt wird, wenn der Messwert für den vorbestimmten Saugdruck gemessen wird. Auf diese Weise ist die Vorrichtung eingerichtet, den Sauggreifer bis zum Anliegen einer Schale gegen diese zu bewegen und den Sauggreifer nur bei Anliegen einer Schale von dem Stapel weg zu bewegen. In dieser Ausführungsform kann die Vorrichtung eingerichtet sein, dass der Sauggreifer gesteuert gegen die erste Ebene beweglich ist, bis ein vorbestimmter Messwert für den Saugdruck gemessen wird.

Jeweils ein erster und ein zweiter Träger, die auf einer ersten Seite des Abstands zwischen zwei gegenüberliegenden Trägern angeordnet sind, und ein davon beabstandeter erster und zweiter Träger, die auf der gegenüberliegenden zweiten Seite angeordnet sind, sind bevorzugt jeweils auf einer gemeinsamen Halterung angeordnet, von denen zumindest eine verschieblich an einem Gestell angebracht ist. Bevorzugt weist die Halterung auch einen Anschlag für die gestapelten Schalen auf, vorzugsweise in dem größeren Abstand, in den die ersten und/oder zweiten Träger beweglich sind. Die verschiebliche Halterung erlaubt, einen ersten und/oder einen zweiten Träger auf einer ersten Seite und einen ersten und einen zweiten Träger auf einer zweiten Seite in einen Abstand einzustellen, in dem sich die Kragen der Schalen erstrecken, sodass die Vorrichtung auf verschieden dimensionierte Schalen anpassbar ist.

Weiter bevorzugt weist das Gestell neben der Halterung auf der ersten Seite und der gegenüberliegenden, beabstandeten Halterung auf der gegenüberliegenden zweiten Seite zumindest zwei weitere beabstandete Anschläge auf, von denen zumindest einer verschieblich und einstellbar ist, die den Raum seitlich der Träger begrenzen, z.B. gemeinsam mit den Trägern einen viereckigen Raum zwischen sich begrenzen. Die Anschläge begrenzen mit den beabstandeten Halterungen, von denen zumindest eine verschieblich ist, einen Raum zur Aufnahme eines Stapels von Schalen, wobei an dem einen Ende die Träger zur Auflage jeweils eines Kragens einer Schale angeordnet sind.

Bevorzugt sind die erste und zweite Ebene horizontal angeordnet, weiter bevorzugt begrenzen Anschläge einen zumindest viereckigen Raum, der sich vertikal oberhalb der zweiten Ebene erstreckt und in dem gestapelte Schalen vertikal verschieblich angeordnet werden können.

Weiter bevorzugt weist das Gestell Abschnitte auf, die gegeneinander verfahrbar sind, sodass die Anschläge in ihrer Dimensionierung einstellbar, bzw. an die Dimensionen verschiedener Schalenböden anpassbar sind.

Es hat sich gezeigt, dass der Sauggreifer bevorzugt eine elastische Dichtlippe um seine Saugöffnung aufweist, um eine gute Saugkraft auch an unebenen Schalenböden oder -wänden anbringen zu können.

Generell können die ersten Träger in der ersten Ebene und die zweiten Träger in der zweiten Ebene dadurch beweglich sein, dass sie in dieser Ebene oder in diese Ebene verschieblich oder schwenkbar sind.

Das Verfahren und die Verwendung einer Vorrichtung zur Durchführung des Verfahrens werden nun genauer mit Bezug auf die Figuren beschrieben, die schematisch in
- Figuren 1 und 2 Vorrichtung und Verfahren,
- Figur 3 eine Variante von Vorrichtung und Verfahren,
- Figur 4 eine Aufsicht auf eine erfindungsgemäße Vorrichtung und
- Figur 5 eine Seitenansicht auf eine erfindungsgemäße Vorrichtung zeigen.

In den Figuren bezeichnen gleiche Bezugsziffern funktionsgleiche Elemente.

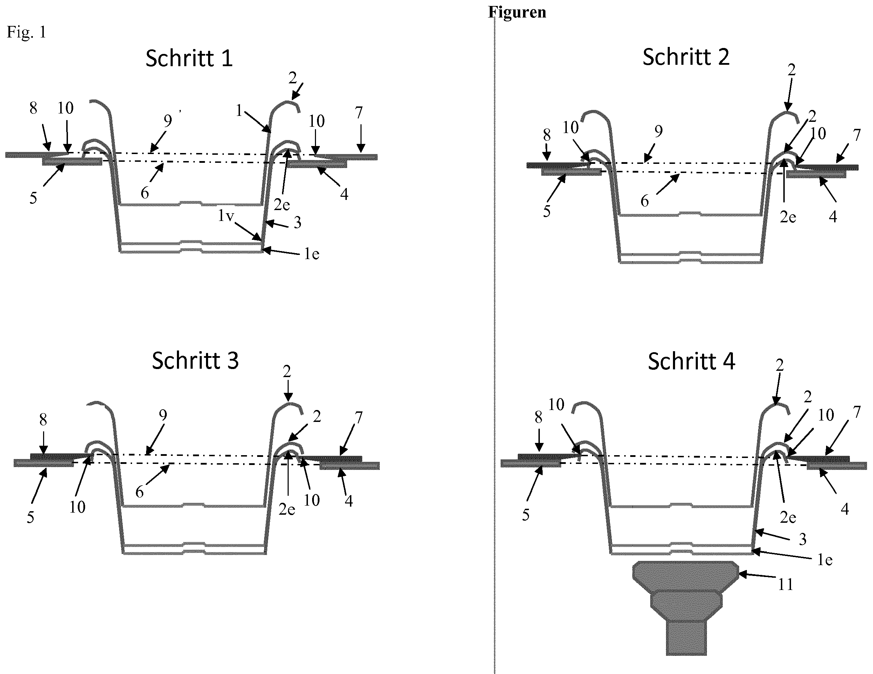

Figur 1 zeigt einen Stapel aus drei Schalen 1, deren Kragen 2 die Schalenwände 3 überragen.

Zwei erste Träger 4, 5 sind in einer ersten Ebene 6 beweglich angeordnet und in einem ersten Schritt in einem kleineren Abstand zueinander positioniert, so dass der endständige Kragen 2e der endständigen Schale 1e auf den ersten Trägern 4, 5 aufliegt. Dabei sind die zweiten Träger 7, 8, die in der zur ersten Ebene 6 parallelen zweiten Ebene 9 beweglich sind, in ihrem größeren Abstand positioniert, so dass sie die Schalen 1 nicht tragen, z.B. nicht kontaktieren. Die Träger 5, 6, 7, 8 können generell wie in der hier gezeigten Ausführung flache, parallel zueinander verschiebliche Platten sein. Die zweiten Träger 7, 8 sind an ihren einander gegenüberliegenden Kanten 10 bevorzugt keilförmig. Wie angedeutet, sind die erste Ebene 6 und die zweite Ebene 9 bevorzugt horizontal.

In dem anschließenden zweiten Schritt werden die zweiten Träger 7, 8 in ihren kleineren Abstand aufeinander zu bewegt, während die ersten Träger 4, 5 unbewegt bleiben können. Der kleinere Abstand der zweiten Träger 7, 8 ist einer, in dem die zweiten Träger 7, 8 den endständigen Kragen 2e der endständigen Schale 1e zusammendrücken und sich dabei deren Kanten 10 unter den Kragen 2 der vorletzten Schale 1v bewegen und dabei den endständigen Kragen 2e der endständigen Schale 1e zusammenschieben. Dadurch wird der endständige Kragen 2e der endständigen Schale 1e von den ersten Trägern 4, 5 in ihrem kleineren Abstand getragen und der Kragen 2 der vorletzten Schale 2v von den zweiten Trägern 7, 8, die ebenfalls in ihrem kleineren Abstand angeordnet sind.

Schritt 3 zeigt, dass die ersten Träger 4, 5 in ihren größeren Abstand bewegt werden und in der Folge nur der Kragen 2 der vorletzten Schale 1v von den zweiten Trägern 7, 8 getragen wird, während der Kragen der endständigen Schale 1e nicht von Trägern 4, 5 getragen wird. Die endständige Schale 1e wird nur durch ihre Klemmung an die vorletzte Schale 1v gehalten.

Im folgenden Schritt 4 wird ein Sauggreifer 11 gegen die erste Ebene 6 bis anliegend an die Außenseite des Bodens 12e der endständigen Schale 1e bewegt und anschließend in eine entferntere Position, um die endständige Schale 1e vom Stapel zu entfernen bzw. zu vereinzeln.

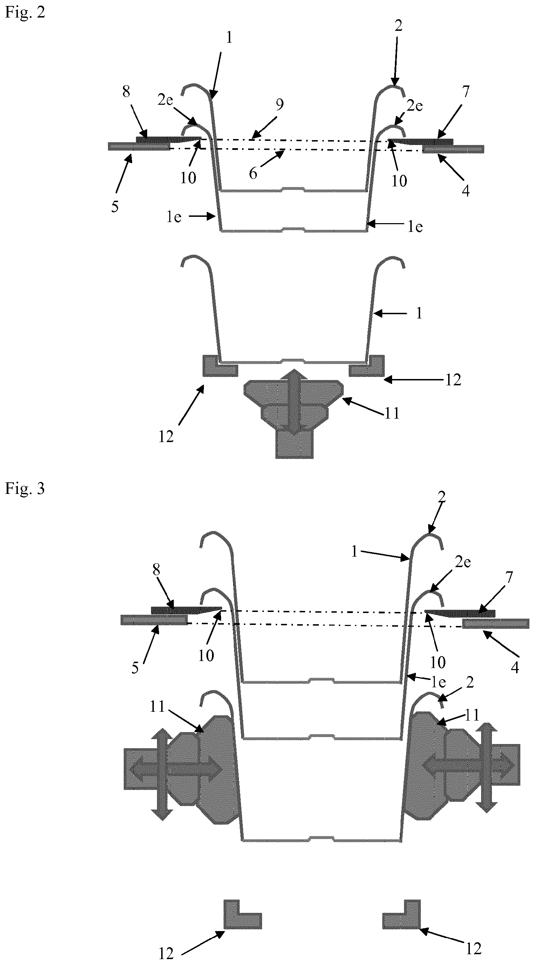

Figur 2 zeigt den anschließenden Schritt 5 der bevorzugten Ausführungsform, bei der der Sauggreifer 11 durch einen Rahmen 12 bewegt wird, der den Boden 12e der endständigen Schale 1e aufnimmt, während der Sauggreifer 11 von dem Rahmen 12 und der endständigen Schale 1e weiter beabstandet wird. Während oder nach Schritt 5 werden, wie in Schritt 6 gezeigt, die ersten Träger 4, 5 in ihren kleineren Abstand bewegt, so dass sie unterhalb des Kragens 2 der nun endständigen Schale 1e angeordnet sind und diese tragen. Die zweiten Träger 7, 8 werden anschließend oder gleichzeitig mit dem Bewegen der ersten Träger 4, 5 in ihren kleineren Abstand in ihren größeren Abstand bewegt, so dass das Verfahren anschließend mit Schritt 1 fortfahren kann. Der Rahmen 12 wird bevorzugt in eine beabstandete Stellung verfahren und es wird ein leerer Rahmen 12 unterhalb des Stapels von Schalen 1, 1e, 1v positioniert.

Es hat sich gezeigt, dass der Sauggreifer 11 bevorzugt einen Saugdruck entsprechend einem Vakuum von nur ca. 10%, bevorzugter maximal 5% oder maximal 1% erzeugen muß, um ein sicheres Halten einer Schale zu erlauben. Dabei weist der Sauggreifer 11 generell bevorzugt eine an der Schale anliegende Säugöffnung auf, deren Querschnitt die Bodenfläche der Schale zu zumindest 50%, bevorzugt zumindest 70% oder zumindest 90% überdeckt bzw. an der Bodenfläche anliegt. Es hat sich gezeigt, dass dieses Vakuum ausreicht, um eine Schale von dem Stapel abzuziehen, auch wenn deren Boden oder Wand eine strukturierte Oberfläche aufweist, z.B. Nuten, Vorsprünge und/oder Durchbrechungen. Ein Sauggreifer mit einer elastischen Dichtlippe ist bevorzugt und hat den Vorteil, bei gleichem Vakuum mit einer höheren Kraft an der Schale zu saugen, als ein Sauggreifer mit starrer Saugglocke.

Bevorzugt ist der Stapel aus Schalen 1 vertikal angeordnet und die erste und zweite Ebene 6, 9 horizontal. Da der Sauggreifer 11 eine Schale 1 sicher halten kann, kann die Vorrichtung alternativ oder zusätzlich zu einer horizontal angeordneten Säugöffnung 13, die etwa vertikal bewegt wird, zu jeder anderen Bewegung eingerichtet sein, z.B. dazu, dass die Saugöffnung aus der Horizontalen geneigt wird.

Figur 3 zeigt eine alternative Bewegung des Sauggreifers 11. Dabei weist die Vorrichtung einen oder zwei Sauggreifer 11 auf, die eingerichtet sind, an einer Schalenwand 3 anzugreifen, z.B. indem sie Saugöffnungen 13 aufweisen, die im Neigungswinkel der Schalenwand 3 gegenüber dem Schalenboden angeordnet sind, z.B. etwa vertikal. Auch in dieser Ausführungsform ist die Vorrichtung eingerichtet, dass die vorletzte Schale 1v von den zweiten Trägern 7, 8 gestützt wird, die in ihrem kleineren Abstand angeordnet sind, während die ersten Träger 4, 5 in ihrem größeren Abstand angeordnet sind, so dass die endständige Schale 1e nicht von Trägern 4, 5 gehalten wird und die Sauggreifer 11 die endständige Schale 1e halten und zu einem Rahmen 12 transportieren.

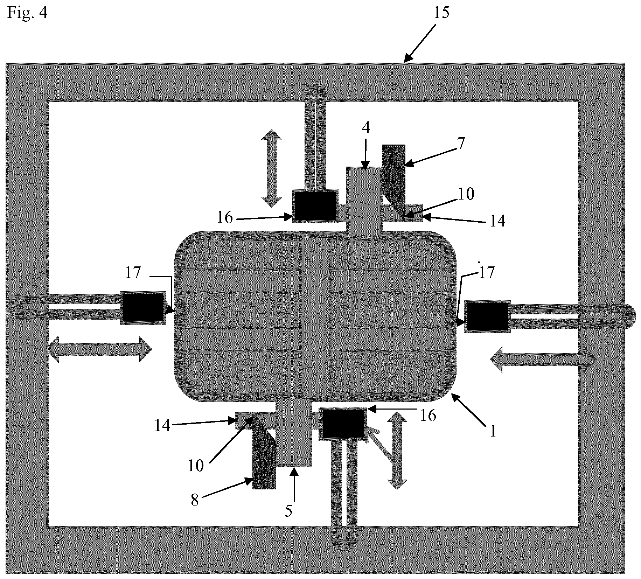

Figur 4 zeigt eine Aufsicht auf einen Stapel Schalen 1 aus der Perspektive auf die Schalenöffnung und auf den Kragen 2. Jeweils ein erster Träger 4 und ein zweiter Träger 7 sind verschieblich auf einer Halterung 14 angeordnet, und ein erster Träger 5 und ein zweiter Träger 8 auf einer davon beabstandeten weiteren Halterung 14. Die Halterungen 14 sind beweglich an einem Gestell 15 geführt, so dass durch Bewegen der Halterungen 14 die Vorrichtung zur Anpassung an verschieden dimensionierte Schalen 1 eingerichtet ist. Die Halterungen 14 können optional Anschläge 16 aufweisen, die als Führung für einen Stapel Schalen 1 einen zumindest viereckigen Raum begrenzen. Bevorzugt weist die Vorrichtung zumindest zwei weitere beabstandete Anschläge 17 auf, von denen zumindest einer verschieblich und einstellbar ist, die den Raum seitlich der Träger begrenzen, z.B. gemeinsam mit den Trägern einen viereckigen Raum zwischen sich begrenzen.

In der Darstellung von Figur 4 sind der unterhalb der Schalen 1 angeordnete Sauggreifer 11 und der Rahmen 12 zum Transport einer durch den Sauggreifer 11 vom Stapel gezogenen Schale 1 nicht sichtbar.

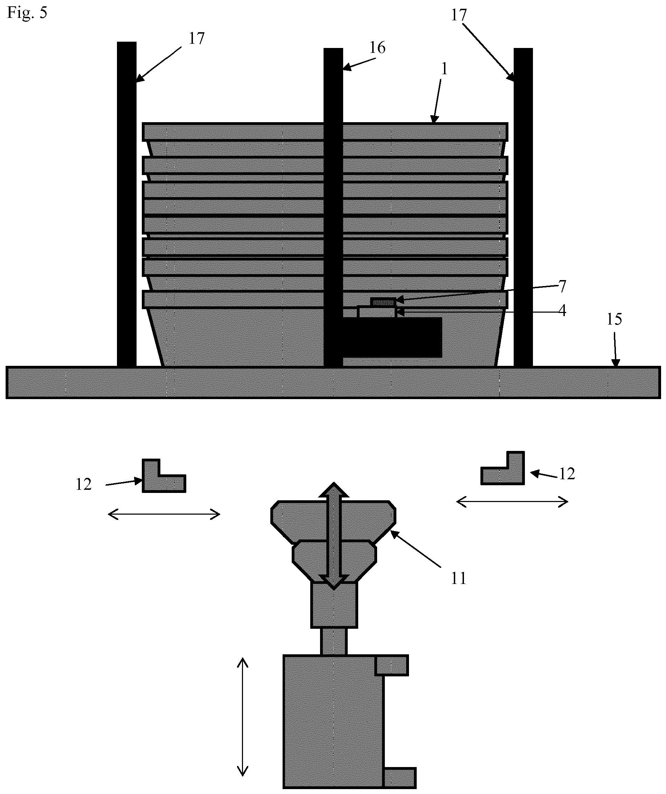

Figur 5 zeigt eine Seitenansicht, bei der ein Stapel rechteckiger Schalen 1 an zwei gegenüberliegenden Seiten von Anschlägen 17 und an den beiden anderen Seiten von Anschlägen 16 und jeweils einem ersten Träger 4, 5 und einem zweiten Träger 7, 8, die auf einer Halterung 14 verschieblich angeordnet sind, eingefasst ist. Zumindest einer der Anschläge 17 und zumindest eine der Halterungen 14 ist gegenüber dem Gestell 15 in seiner Position einstellbar, so dass die Vorrichtung an Stapel verschieden dimensionierter Schalen 1 anpaßbar ist. Entsprechend der in Figur 1 bzw. 2 gezeigten Ausführungsform ist der Sauggreifer 11 unterhalb der ersten Ebene 6 angeordnet.

Bevorzugt ist die Position des Sauggreifers 11 gesteuert verfahrbar, z.B. entlang einer Vertikalen, z.B. mittels eines Pneumatikzylinders. Weiter dargestellt ist, dass der Rahmen bevorzugt in seiner Größer einstellbar ist, z.B. durch Verfahren seiner Abschnitte gegeneinander, um ihn an verschieden dimensionierte Schalen 1 anzupassen.

### Bezugszeichen:

| | |
|---|---|
| 1 Schale | 13 Säugöffnung |
| 1e endständige Schale | 14 Halterung |
| 1v vorletzte Schale | 15 Gestell |
| 2 Kragen | 16 Anschlag |
| 2e endständiger Kragen | 17 Anschlag |
| 3 Schalenwand | |
| 4 erster Träger | |
| 5 erster Träger | |
| 6 erste Ebene | |
| 7 zweiter Träger | |
| 8 zweiter Träger | |
| 9 zweite Ebene | |
| 10 Kante | |
| 11 Sauggreifer | |
| 12 Rahmen | |

## Patentansprüche

1. Verfahren zum Vereinzeln von ineinander gestapelten elastischen Schalen (1, 1v, 1e), deren Öffnung zumindest abschnittsweise von einem nach außen überstehenden Kragen (2, 2e) eingefasst ist, bei dem in einem ersten Schritt erste Träger (4, 5) in einer ersten Ebene (6) in einem kleinen Abstand angeordnet sind und darauf der Kragen einer endständigen Schale (1e) des Stapels aufliegt und zweite Träger (7, 8), die in einer zur ersten Ebene (6) parallelen zweiten Ebene (9) in einem größeren Abstand voneinander angeordnet sind, in einem zweiten Schritt die zweiten Träger (7, 8) in einen kleineren Abstand bewegt werden, so dass die zweiten Träger (7, 8) gegen den auf den ersten Trägern aufliegenden Kragen (2e) einer endständigen Schale (1e) bewegt werden und diesen Kragen (2e) bis in den kleineren Abstand der zweiten Träger (7, 8) zusammendrücken, in einem dritten Schritt in dem Zustand, in dem die ersten Träger (4, 5) in ihren kleineren Abstand bewegt sind und die zweiten Träger (7, 8) in ihren kleineren Abstand bewegt sind, sodass der Kragen (2e) einer endständigen Schale (1e) auf den ersten Trägern (4, 5) aufliegt und der Kragen (2) einer in dieser endständigen Schale (1e) gestapelten vorletzten Schale (1v) auf den zweiten Trägern (7, 8) aufliegt, die ersten Träger (4, 5) in einen größeren Abstand bewegt werden und in einem gleichzeitigen oder anschließenden vierten Schritt ein Sauggreifer (11) gegen den Boden oder die Wandung der endständigen Schale (1e) verfahren wird, sich daran ansaugt und in einen größeren Abstand von der ersten Ebene (6) bewegt wird, wobei sich die zweiten Träger (7, 8) beim Zusammendrücken des Kragens (2e) der endständigen Schale (1e) unter den überstehenden Kragen (2) der vorletzten Schale (1v) bewegen, die angrenzend an die endständige Schale (1e) des Stapels gestapelt ist.

2. Verfahren nach Anspruch 1, **dadurch gekennzeichnet, dass** der Sauggreifer (11) die Schale auf einen Rahmen (12) transportiert und sich von der Schale (1e) trennt.

3. Verfahren nach Anspruch 1 oder 2, **gekennzeichnet durch** einen fünften Schritt, in dem die ersten Träger (4, 5) in ihren kleineren Abstand bewegt werden, so dass die ersten Träger (4, 5) unter dem Kragen (2) der endständigen Schale (1e) angeordnet sind und anschließend die zweiten Träger (7, 8) in ihren größeren Abstand bewegt werden, sodass der Kragen (2) der nun endständigen Schale auf den ersten Trägern (4, 5) aufliegt und wieder die Schritte 1 bis 4 ablaufen.

4. Verfahren nach einem der Ansprüche 1 bis 3, **dadurch gekennzeichnet, dass** die zweiten Träger (7, 8) gesteuert sind, in ihrem kleineren Abstand den Kragen (2e) der endständigen Schale (1e), bestimmt in der zweiten Ebene (9), um zumindest 20 % zusammenzudrücken.

5. Verfahren nach einem der Ansprüche 1 bis 4, **dadurch gekennzeichnet, dass** an den zweiten Trägern (7, 8) Kraftsensoren angeordnet sind, die die Kraft messen, mit der die zweiten Träger (7, 8) gegen einen Kragen belastet sind, und eine Steuerungseinrichtung die zweiten Träger (7, 8) abhängig vom Signal der Kraftsensoren bewegt, insbesondere bis von den Kraftsensoren ein Signal für eine vorbestimmte Kraft gemessen wird.

6. Verfahren nach einem der Ansprüche 1 bis 5 **dadurch gekennzeichnet, dass** an den ersten Trägern (4, 5) Kraftsensoren angeordnet sind, die die Kraft zu messen, mit der die ersten Träger (4, 5) gegen einen Kragen belastet sind, und eine Steuerungseinrichtung eingerichtet ist, die ersten Träger (4, 5) in Richtung auf die Schale (1e) zu verfahren, bis ein vorbestimmter Messwert für die Kraft gemessen wird.

7. Verfahren nach einem der Ansprüche 1 bis 6, **dadurch gekennzeichnet, dass** ein Drucksensor den Saugdruck im Sauggreifer misst und der Sauggreifer bis zum Messen eines vorbestimmten Saugdrucks durch den Drucksensor in Richtung auf die erste Ebene (6) bewegt wird und bevorzugt den Sauggreifer nach Messen des vorbestimmten Saugdrucks von der ersten Ebene (6) weg bewegt wird.

8. Verwendung einer Vorrichtung zur Durchführung des Verfahrens nach einem der voranstehenden Ansprüche zum Vereinzeln ineinander gestapelter elastischer Schalen (1, 1v, 1e), wobei die Öffnung der Schalen (1, 1v, 1e) zumindest abschnittsweise von einem nach außen überstehenden Kragen (2, 2e) eingefasst ist, mit zwei in einer ersten Ebene (6) angeordneten ersten Trägern (4, 5), von denen zumindest einer gesteuert gegen den anderen in einen kleineren und einen größeren Abstand in der ersten Ebene (6) beweglich ist, und zwei in eine zur ersten Ebene (6) parallelen zweiten Ebene (9) angeordneten zweiten Trägern (7, 8), die gesteuert einer gegen den anderen in der zweiten Ebene (9) in einen kleineren und einen größeren Abstand beweglich sind, und dass die Vorrichtung einen Sauggreifer (11) aufweist, dessen Saugöffnung (13) in einen Abstand zur ersten Ebene (6) beweglich ist, wobei die zweiten Träger (7, 8) eingerichtet sind, in einen kleineren Abstand zueinander als die ersten Träger (4, 5) zueinander bewegt zu werden, um den Kragen (2e) einer endständigen Schale (1e) zusammenzudrücken, während die ersten Träger (4, 5) in ihrem kleineren Abstand angeordnet sind.

9. Verwendung nach Anspruch 8, **dadurch gekennzeichnet, dass** die Saugöffnung (13) auf der Seite der ersten Ebene (6) gegenüber der zweiten Ebene (9) angeordnet ist und gegen die erste Ebene (6) in einem Abstand zur ersten Ebene (6) beweglich ist.

10. Verwendung nach einem der Ansprüche 8 bis 9, **dadurch gekennzeichnet, dass** an den zweiten Trägern (7, 8) Kraftsensoren angeordnet sind, die eingerichtet sind, die Kraft zu messen, mit der die zweiten Träger (7, 8) belastet sind, insbesondere gegen einen Kragen belastet sind, und eine Steuerungseinrichtung aufweist, die eingerichtet ist, die zweiten Träger (7, 8) abhängig vom Signal der Kraftsensoren zu bewegen, insbesondere bis von den Kraftsensoren ein Signal für eine vorbestimmte Kraft gemessen wird.

11. Verwendung nach einem der Ansprüche 8 bis 10, **dadurch gekennzeichnet, dass** die Saugöffnung (13) in einem Winkel von 30° bis 90° zur ersten Ebene (6) beweglich ist.

12. Verwendung nach einem der Ansprüche 8 bis 11, **dadurch gekennzeichnet, dass** an den ersten Trägern (4, 5) Kraftsensoren angeordnet sind, die eingerichtet sind, die Kraft zu messen, mit der die ersten Träger (4, 5) belastet sind, insbesondere gegen einen Kragen belastet sind, und dass die Vorrichtung eine Steuerungseinrichtung aufweist, die eingerichtet ist, die ersten Träger (4, 5) in Richtung auf die Schale (1e) zu verfahren, bis ein vorbestimmter Messwert für die Kraft gemessen wird.

13. Verwendung nach einem der Ansprüche 8 bis 12, **dadurch gekennzeichnet, dass** die Vorrichtung eingerichtet ist, dass zumindest ein erster Träger (4) gesteuert in einer ersten Stellung positioniert ist, in der er in einem kleineren Abstand von dem anderen ersten Träger (5) positioniert ist, während der zumindest eine zweite Träger (7) von einer Stellung, in der er einen größeren Abstand von dem anderen zweiten Träger (8) hat, in eine Stellung bewegt wird, in der er einen kleineren Abstand von dem anderen zweiten Träger (8) hat.

14. Verwendung nach einem der Ansprüche 8 bis 13, **dadurch gekennzeichnet, dass** die Vorrichtung eingerichtet ist, dass der zumindest eine erste Träger (4) von einer ersten Stellung, in der er in einem kleineren Abstand von dem anderen ersten Träger (5) hat, in eine zweite Stellung in einem größeren Abstand von dem anderen ersten Träger (5) bewegt wird, während der zumindest eine zweite Träger (7) gesteuert in einer Stellung positioniert ist, in der er einen kleineren Abstand von dem anderen zweiten Träger (8) hat.

15. Verwendung nach einem der Ansprüche 8 bis 14, **dadurch gekennzeichnet, dass** die Vorrichtung eingerichtet ist, dass der Sauggreifer (11) dann von einem kleinen Abstand von der ersten Ebene (6) in einen größeren Abstand zur ersten Ebene (6) verfahren wird, wenn der zumindest eine erste Träger (4) in einem größeren Abstand von dem anderen ersten Träger (5) positioniert ist und der zumindest eine zweite Träger (7) in einem geringeren Abstand als dieser von dem anderen zweiten Träger (8) positioniert ist.

16. Verwendung nach einem der Ansprüche 8 bis 15, **dadurch gekennzeichnet, dass** die ersten Träger (4, 5) einer gesteuert gegen den anderen in einen kleineren und einen größeren Abstand in die erste Ebene (6) beweglich sind.

17. Verwendung nach einem der Ansprüche 8 bis 16, **gekennzeichnet durch** einen Rahmen (12) zur Aufnahme einer Schale (1, 1v, 1e), gegen den der Sauggreifer (11) in einer ersten Stellung des Rahmens (12) beweglich ist, wobei der Rahmen (12) in eine von der ersten Stellung beabstandete zweite Stellung beweglich ist.

18. Verwendung nach einem der Ansprüche 8 bis 17, **dadurch gekennzeichnet, dass** zumindest jeweils ein erster und ein zweiter Träger (4, 7) auf einer Halterung beweglich geführt sind, die an einem Gestell (15) verschieblich angeordnet ist, das Anschläge (16, 17) zur Führung eines Stapels elastischer Schalen (1) aufweist.

19. Verwendung nach einem der Ansprüche 8 bis 18, **dadurch gekennzeichnet, dass** die zweiten Träger (4, 5) und/oder die ersten Träger (7, 8) eine keilförmig zulaufende Kante (10) aufweisen, die den Abstand zwischen sich begrenzen.

20. Verwendung nach einem der Ansprüche 8 bis 19, **dadurch gekennzeichnet, dass** die ersten Träger (4, 5) in die erste Ebene (6) und /oder die zweiten Träger (7, 8) in die zweite Ebene (9) schwenkbar und/oder verschieblich sind.

21. Verwendung nach einem der Ansprüche 8 bis 20, **dadurch gekennzeichnet, dass** der kleinere Abstand, in dem die zweiten Träger (7, 8) eingerichtet sind, den Kragen (2e) einer endständigen Schale (1e) zusammenzudrücken, der in der zweiten Ebene bestimmte Abstand der äußeren Kragenkanten ist und dieser Abstand um einen Betrag von zweimal mindestens 20 % der Erstreckung des Kragens in der zweiten Ebene kleiner ist als im unbelasteten Zustand.

22. Verwendung nach einem der Ansprüche 8 bis 21, **dadurch gekennzeichnet, dass** der Sauggreifer einen Drucksensor aufweist und die Vorrichtung eingerichtet ist, den Sauggreifer bis zum Messen eines vorbestimmten Saugdrucks durch den Drucksensor in Richtung auf die erste Ebene (6) zu bewegen und bevorzugt den Sauggreifer nach Messen des vorbestimmten Saugdrucks von der ersten Ebene (6) weg zu bewegen.

## Claims

1. Process for separating elastic shells (1, 1v, 1e) stacked into one another, the opening of which is at least sectionally encompassed by a collar (2, 2e) projecting outwards, wherein in a first step first carriers (4, 5) are arranged in a first plane (6) at a small distance and the collar of a terminal shell (1e) of the stack rests thereon and second carriers (7, 8), which are arranged in a second plane (9) parallel to the first plane (6) at a larger distance from one another, in a second step are moved into a smaller distance, so that the second carriers (7, 8) are moved against the collar (2e) of a terminal shell (1e), resting on the first carriers and compress this collar (2e) into the smaller distance between the second carriers (7, 8), in a third step in the state in which the first carriers (4, 5) have been moved into their smaller distance and the second carriers (7, 8) have been moved into their smaller distance so that the collar (2e) of a terminal shell (1e) rests on the first carriers (4, 5) and the collar (2) of a penultimate shell (1v) stacked into this terminal shell (1e) rests on the second carriers (7, 8), the first carriers (4, 5) are moved into a greater distance and, in a simultaneous or subsequent fourth step, a suction gripper (11) is moved against and suctioned against the bottom or the wall of the terminal shell (1e) and is moved into a greater distance from the first plane (6), wherein upon compressing the collar (2e) of the terminal shell (1e), the second carriers (7, 8) are moved below the projecting collar (2) of the penultimate shell (1v) that is stacked adjacent to the terminal shell (1e) of the stack.

2. Process according to claim 1, **characterized in that** the suction gripper (11) transports the shell onto a frame (12) and separates from the shell (1e).

3. Process according to claim 1 or 2, **characterized by** a fifth step in which the first carriers (4, 5) are moved into their smaller distance so that the first carriers (4, 5) are arranged below the collar (2) of the terminal shell (1e), and subsequently the second carriers (7, 8) are moved into their greater distance so that the collar (2) of the now terminal shell rests on the first carriers (4, 5) and steps 1 to 4 are carried out again.

4. Process according to one of claims 1 to 3, **characterized in that** the second carriers (7, 8) in their smaller distance are controlled to compress the collar (2e) of the terminal shell (1e) by at least 20 %, determined in the second plane (9).

5. Process according to one of claims 1 to 4, **characterized in that** on the second carriers (7, 8) force sensors are arranged which measure the force with which the second carriers (7, 8) are loaded against a collar, and a control device moves the second carriers (7, 8) in dependence on the signal of the force sensors, in particular until a signal for a predetermined force is measured by the force sensors.

6. Process according to one of claims 1 to 5, **characterized in that** on the first carriers (4, 5) force sensors are arranged which measure the force with which the first carriers (4, 5) are loaded against a collar, and a control device is configured to move the first carriers (4, 5) in the direction towards the shell until a signal for a predetermined force is measured by the force sensors.

7. Process according to one of claims 1 to 6, **characterized in that** a pressure sensor measures the suction pressure in the suction gripper and the suction gripper is moved in the direction of the first plane (6) until a predetermined suction pressure is measured by the pressure sensor, and preferably the suction gripper is moved away from the first plane (6) after measuring the predetermined suction pressure.

8. Use of a device to carry out a process according to one of the preceding claims for separating elastic shells (1, 1v, 1e) stacked into one another, wherein the opening of the shells (1, 1v, 1e) is at least sectionally encompassed by a collar (2, 2e) projecting outwards, with two first carriers (4, 5) arranged in a first plane (6), at least one of which is movable in a controlled manner against the other into a smaller and a larger distance in the first plane (6), and with two second carriers (7, 8) arranged in a second plane (9) parallel to the first plane (6), which are movable against one another into a smaller and a larger distance in the second plane (9), and wherein the device has a suction gripper (11) whose suction opening (13) is movable into a distance from the first plane (6), wherein the second carriers (7, 8) are arranged to be moved into a smaller distance from one another than the first carriers (4, 5) from one another in order to compress the collar (2e) of a terminal shell (1e) while the first carriers (4, 5) are arranged at their smaller distance.

9. Use according to claim 8, **characterized in that** the suction opening (13) is arranged on the side of the first plane (6) opposite the second plane (9) and is movable against the first plane (6) at a distance from the first plane (6).

10. Use according to one of claims 8 to 9, **characterized in that** at the second carriers (7, 8) force sensors are arranged which are configured to measure the force with which the second carriers (7, 8) are loaded, in particular loaded against a collar, and in having a control device which is configured to move the second carriers (7, 8) depending on the signal of the force sensors, in particular until a signal for a predetermined force is measured by the force sensors.

11. Use according to one of claims 8 to 10, **characterized in that** the suction opening (13) is movable in an angle to the first plane (6) of 30° to 90°.

12. Use according to one of claims 8 to 11, **characterized in that** at the first carriers (4, 5) force sensors are arranged which are configured to measure the force with which the first carriers (4, 5) are loaded, in particular loaded against a collar, and **in that** the device has a control device which is configured to move the first carriers (4, 5) until a signal for a predetermined force is measured by the force sensors.

13. Use according to one of claims 8 to 12, **characterized in that** the device is configured so that at least one first carrier (4) is positioned in a controlled manner in a first position in which it is positioned at a smaller distance from the other first carrier (5), while the at least one second carrier (7) is moved from a position in which it has a greater distance from the other second carrier (8) into a position in which it has a smaller distance from the other second carrier (8).

14. Use according to one of claims 8 to 13, **characterized in that** the device is configured so that the at least one first carrier (4) is moved from a first position in which it is at a smaller distance from the other first carrier (5) into a second position at a greater distance from the other first carrier (5), while the at least one second carrier (7) is positioned in a controlled manner in a position in which it is at a smaller distance from the other second carrier (8).

15. Use according to one of claims 8 to 14, **characterized in that** the device is configured so that the suction gripper (11) is moved from a small distance from the first plane (6) into a greater distance from the first plane (6) when the at least one first carrier (4) is positioned at a greater distance from the other first carrier (5) and the at least one second carrier (7) is positioned at a smaller distance than this is positioned from the other second carrier (8).

16. Use according to one of claims 8 to 15, **characterized in that** the first carriers (4, 5) are movable in a controlled manner against one another into a smaller and a greater distance into the first plane (6).

17. Use according to one of claims 8 to 16, **characterized by** a frame (12) for receiving a shell (1, 1v, 1e), against which frame (12) the suction gripper (11) is movable in a first position of the frame (12), wherein the frame (12) is movable into a second position spaced from the first position.

18. Use according to one of claims 8 to 17, **characterized in that** at least one first and one second carrier (4, 7) each are movably guided on a holder which is slidably arranged on a frame (15) having stops (16, 17) for guidance of a stack of elastic shells (1).

19. Use according to one of claims 8 to 18, **characterized in that** the second carriers (4, 5) and/or the first carriers (7, 8) have a wedge-shaped tapering edge (10) that limit the distance between them.

20. Use according to one of claims 8 to 19, **characterized in that** the first carriers (4, 5) are pivotable and/or slidable in the first plane (6), and/or the second carriers (7, 8) are pivotable and/or slidable in the second plane (9).

21. Use according to one of claims 8 to 20, **characterized in that** the smaller distance, in which the second carriers (7, 8) are arranged to compress the collar (2e) of a terminal shell (1e), is the distance of the outer collar edges determined in the second plane, and this distance is smaller than in the unloaded state by an amount of two times of at least 20 % of the extent of the collar in the second plane.

22. Use according to one of claims 8 to 21, **characterized in that** the suction gripper has a pressure sensor and the device is configured to move the suction gripper into the direction of the first plane (6) until a predetermined suction pressure is measured by the pressure sensor, and preferably to move the suction gripper away from the first plane (6) after measuring the predetermined suction pressure.

## Revendications

1. Procédé de séparation de bols élastiques (1, 1v, 1e) empilés les uns dans les autres, dont l'ouverture est bordée au moins par sections d'un col (2, 2e) saillant vers l'extérieur ; dans lequel, dans une première étape, de premiers supports (4, 5) sont disposés à une petite distance d'écart dans un premier plan (6), et sur ceux-ci reposent le col d'un bol (1e) terminal de la pile et de deuxièmes supports (7, 8) qui sont disposés à une plus grande distance d'écart l'un de l'autre dans un deuxième plan (9) parallèle au premier plan (6); dans une deuxième étape, les deuxièmes supports (7, 8) sont déplacés à une plus petite distance d'écart de manière que les deuxièmes supports (7, 8) soient déplacés contre le col (2e) d'un bol terminal (1e) reposant sur les premiers supports et qu'ils compriment ce col (2e) jusqu'à la plus petite distance d'écart des deuxièmes supports (7, 8); dans une troisième étape, dans l'état dans lequel les premiers supports (4, 5) sont déplacés à leur plus petite distance d'écart et dans lequel les deuxièmes supports (7, 8) sont déplacés à leur plus petite distance d'écart de manière que le col (2e) d'un bol (1e) terminal repose sur les premiers supports (4, 5) et le col (2) d'un avant-dernier bol (1v) empilé dans ce bol (1e) terminal repose sur les deuxièmes supports (7, 8), les premiers supports (4, 5) sont déplacés à une plus grande distance d'écart; et dans une quatrième étape simultanée ou ultérieure, une ventouse de préhension (11) est conduite contre le fond ou la paroi d'un bol (1e) terminal, s'y accroche par aspiration et est déplacé à une plus grande distance d'écart du premier plan (6), les deuxièmes supports (7, 8) se déplaçant durant la compression du col (2e) du bol (1e) terminal sous le col (2) saillant de l'avant-dernier bol (1v), qui est empilé de manière à être adjacent au bol (1e) terminal de la pile.

2. Procédé selon la revendication 1, **caractérisé en ce que** la ventouse de préhension (11) transporte le bol sur un cadre (12) et se sépare du bol (1e).

3. Procédé selon la revendication 1 ou 2, **caractérisé par** une cinquième étape, dans laquelle les premiers supports (4, 5) sont déplacés à leur plus petite distance d'écart de manière que les premiers supports (4, 5) soient disposés sous le col (2) du bol (1e) terminal, et les deuxièmes supports (7, 8) sont ensuite déplacés à leur plus grande distance d'écart de manière que le col (2) du bol désormais terminal repose sur les premiers supports (4, 5) et les étapes 1 à 4 se déroulent de nouveau.

4. Procédé selon l'une des revendications 1 à 3, **caractérisé en ce que** les deuxièmes supports (7, 8) sont commandés à comprimer, à leur plus petite distance d'écart, le col (2e) du bol (1e) terminal, déterminé dans le deuxième plan (9), d'au moins 20 %.

5. Procédé selon l'une des revendications 1 à 4, **caractérisé en ce que** des capteurs de force sont disposés au niveau des deuxièmes supports (7, 8), les capteurs de force mesurant la force agissant sur les deuxièmes supports (7, 8) relativement à un col, et **en ce qu'**un dispositif de commande déplace les deuxièmes supports (7, 8) en fonction du signal des capteurs de force, en particulier jusqu'à ce qu'un signal pour une force prédéterminée soit mesuré par les capteurs de force.

6. Procédé selon l'une des revendications 1 à 5, **caractérisé en ce que** des capteurs de force sont disposés au niveau des premiers supports (4, 5), les capteurs de force mesurant la force agissant sur les premiers supports (4, 5) relativement à un col, et **en ce qu'**un dispositif de commande est adapté à conduire les premier supports (4, 5) vers le bol (1e) jusqu'à ce qu'une valeur de mesure prédéterminée pour cette force soit mesurée.

7. Procédé selon l'une des revendications 1 à 6, **caractérisé en ce qu'**un capteur de pression mesure la pression d'aspiration dans la ventouse de préhension et la ventouse de préhension est déplacée vers le premier plan (6) jusqu'au mesurage par le capteur de pression d'une pression d'aspiration prédéterminée et, de préférence, la ventouse de préhension est éloignée du premier plan (6) après le mesurage de la pression d'aspiration prédéterminée.

8. Utilisation d'un dispositif de réalisation du procédé selon l'une des revendications précédentes pour séparer des bols (1, 1v, 1e) élastiques empilés les uns dans les autres, l'ouverture des bols (1, 1v, 1e) étant bordée au moins par sections d'un col (2, 2e) saillant vers l'extérieur, avec deux premiers supports (4, 5) disposés dans un premier plan (6), dont au moins l'un est déplaçable relativement à l'autre de manière commandée à une plus petite ou plus grande distance d'écart dans le premier plan (6), et avec deux deuxièmes supports (7, 8) disposés dans un deuxième plan (9) parallèle au premier plan (6), qui sont déplaçables l'un relativement à l'autre de manière commandée à une plus petite et plus grande distance d'écart dans le deuxième plan (9), et en ce que le dispositif présente une ventouse de préhension (11) dont l'ouverture d'aspiration (13) est déplaçable à une distance d'écart du premier plan (6), les deuxièmes supports (7, 8) étant adaptés à être déplacés à une distance d'écart l'un relativement à l'autre qui est plus petite que celle des premiers supports (4, 5) l'un relativement à l'autre, afin de comprimer le col (2e) d'un bol (1e) terminal pendant que les premiers supports (4, 5) sont disposés à leur plus petite distance d'écart.

9. Utilisation selon la revendication 8, **caractérisée en ce que** l'ouverture d'aspiration (13) est disposée du côté du premier plan (6) en face du deuxième plan (9) et qu'elle est déplaçable relativement au premier plan (6) à une distance d'écart du premier plan (6).

10. Utilisation selon l'une des revendications 8 à 9, **caractérisée en ce que** des capteurs de force sont disposés au niveau des deuxièmes supports (7, 8), les capteurs de force étant adaptés à mesurer la force agissant sur les deuxièmes supports (7, 8), en particulier relativement à un col, et **en ce qu'**il présente un dispositif de commande qui est adapté à déplacer les deuxièmes supports (7, 8) en fonction du signal des capteurs de force, en particulier jusqu'à ce qu'un signal pour une force prédéterminée soit mesuré par les capteurs de force.

11. Utilisation selon l'une des revendications 8 à 10, **caractérisée en ce que** l'ouverture d'aspiration (13) est déplaçable selon un angle de 30° à 90° par rapport au premier plan (6).

12. Utilisation selon l'une des revendications 8 à 11, **caractérisée en ce que** des capteurs de force sont disposés au niveau des premiers supports (4, 5), les capteurs de force étant adaptés à mesurer la force agissant sur les premier supports (4, 5), en particulier relativement à un col, et **en ce que** le dispositif présente un dispositif de commande qui est adapté à conduire les premiers supports (4, 5) vers le bol (1e) jusqu'à ce qu'une valeur de mesure prédéterminée pour cette force soit mesurée.

13. Utilisation selon l'une des revendications 8 à 12, **caractérisée en ce que** le dispositif est adapté à ce qu'au moins un premier support (4) se positionne de manière commandée dans une première position dans laquelle il se positionne à une plus petite distance d'écart de l'autre premier support (5), pendant que l'au moins un deuxième support (7) est déplacé d'une position dans laquelle il a une plus grande distance d'écart de l'autre deuxième support (8) dans une position dans laquelle il a une plus petite distance d'écart de l'autre deuxième support (8).

14. Utilisation selon l'une des revendications 8 à 13, **caractérisée en ce que** le dispositif est adapté à ce que l'au moins un premier support (4) soit déplacé d'une première position dans laquelle il a une plus petite distance d'écart de l'autre premier support (5) dans une deuxième position à une plus grande distance d'écart de l'autre premier support, pendant que l'au moins un deuxième support (7) se positionne de manière commandée dans une position dans laquelle il a une plus petite distance d'écart de l'autre deuxième support (8).

15. Utilisation selon l'une des revendications 8 à 14, **caractérisée en ce que** le dispositif est adapté à ce que la ventouse de préhension (11) soit ensuite déplacée d'une petite distance d'écart du premier plan (6) à une plus grande distance d'écart du premier plan (6) quand l'au moins un premier support (4) se positionne à une plus grande distance d'écart de l'autre premier support (5) et que l'au moins un deuxième support (7) se positionne à une plus petite distance d'écart de l'autre deuxième support (8) que ce dernier.

16. Utilisation selon l'une des revendications 8 à 15, **caractérisée en ce que** les premiers supports (4, 5) sont déplaçables l'un relativement à l'autre de manière commandée à une plus petite distance d'écart et à une plus grande distance d'écart dans le premier plan (6).

17. Utilisation selon l'une des revendications 8 à 16, **caractérisée par** un cadre (12) pour la réception d'un bol (1, 1v, 1e), relativement auquel la ventouse de préhension (11) est déplaçable dans une première position du cadre (12), le cadre (12) étant déplaçable dans une deuxième position à une distance de la première position.

18. Utilisation selon l'une des revendications 8 à 17, **caractérisée en ce qu'**au moins un premier et un deuxième support (4, 7) sont respectivement guidés de manière déplaçable sur un support de montage, qui est disposé de manière glissable sur un plateau (15), qui présente des butées (16, 17) pour guider une pile de bols (1) élastiques.

19. Utilisation selon l'une des revendications 8 à 18, **caractérisée en ce que** les deuxièmes supports (4, 5) et/ou les premiers supports (7, 8) présentent un bord (10) cunéiforme, qui limitent la distance d'écart entre ceux-ci.

20. Utilisation selon l'une des revendications 8 à 19, **caractérisée en ce que** les premiers supports (4, 5) peuvent être pivotés et/ou glissés dans le premier plan (6) et/ou les deuxièmes supports (7, 8) peuvent être pivotés et/ou glissés dans le deuxième plan (9).

21. Utilisation selon l'une des revendications 8 à 20, **caractérisée en ce que** la plus petite distance d'écart, à laquelle les deuxièmes supports (7, 8) sont aménagés pour comprimer le col (2e) du bol (1e) terminal, est la distance d'écart entre les bords de col extérieurs déterminée dans le deuxième plan et cette distance d'écart est plus petite d'un montant de deux fois au moins 20 % de l'extension du col dans le deuxième plan qu'à l'état sans charge.

22. Utilisation selon l'une des revendications 8 à 21, **caractérisée en ce que** la ventouse de préhension présente un capteur de pression et le dispositif est adapté à déplacer la ventouse de préhension vers le premier plan (6) jusqu'au mesurage d'une pression d'aspiration prédéterminée par le capteur de pression et, de préférence, la ventouse de préhension est éloignée du premier plan (6) après le mesurage de la pression d'aspiration prédéterminée.
